# EUROPEAN PATENT APPLICATION

(11) **EP 4 790 026 A1**
(43) Date of publication of application: **12.08.2026**
(21) Application number: 26155692.2
(22) Date of filing: 02.02.2026
(51) Int. Cl.: C02F 1/461, A23B 2/60, A23B 70/50, C02F 1/467, C02F 1/48, C02F 1/00

(54) **FLUID TREATMENT APPARATUS WITH PULSED ELECTRIC FIELDS**

(30) Priority: 05.02.2025 IT 202500002169
(71) Applicant: Ghezzi, Massimiliano, 20867 Caponago (MB) (IT)
(72) Inventor: Ghezzi, Massimiliano, 20867 Caponago (MB) (IT)
(74) Representative: Praxi Intellectual Property Milano

(57) **Abstract**

Apparatus for treating various fluids, such as wine, must, water, oil, sauce, fruit juice, and others, to prevent contamination or the development and spread of diseases such as salmonella and legionella. The apparatus allows to avoid excessive proliferation of colonies of bacteria and yeasts which, if present in excessive quantities, can cause mould and pathogens in general. The apparatus comprises a container body containing a reticular cathode and anode that allow the liquid to pass through and are powered by an electrical connector that receives electrical current from a power supply controlled by an electronic control unit. The container body is configured to be immersed in the liquid to be treated, allowing the liquid to flow through the cathode and anode, which generate a pulsed electric field. The electrical signal has a frequency of about 300 Hz, an amplitude of 100V and pulses of few milliseconds. To increase the efficiency of the treatment, the signal changes polarity every 90 seconds.

## Description

### BACKGROUND OF THE INVENTION

The present invention relates to an apparatus for treating fluids.

More specifically, the present invention relates to an apparatus that uses Pulsed Electric Field (PEF) technology to improve the quality and safety of various fluids, such as wine, must, water, oil, sauce, fruit juice and others.

Currently, most conventional treatments used in the food industry involve mechanical destruction or the use of heat (e.g. blanching or scalding), which have the disadvantage of causing, in many cases, deterioration in quality, for example with reference to all the heat-labile nutritional compounds being lost, as well as the high energy costs.

Among innovative technologies, PEF (Pulsed Electric Fields) treatment is of considerable interest in the food sector due to its non-thermal nature and the possibility of being used as a pre-treatment in many production processes, offering improvements in terms of time, cost and final quality of food products.

In the food technology sector, the application of irreversible PEF treatment appears to offer significant advantages, especially for processes requiring mass or heat transfer, such as water removal in dehydration processes or the extraction of juices, colouring agents and antioxidants from plant matrices.

Electroporation can facilitate extraction processes, both as primary production processes (extraction of juices from fruit and vegetables, extraction of oil, extraction of sugar from beet or sugar cane) and as secondary processes, for example for the extraction of bioactive compounds from food waste.

Numerous studies have shown that PEF technology can, in many cases, reduce processing times and improve extraction yields.

In the electroporation process, a substance is placed between two electrodes, and then a pulsed electric field is applied. The electric field enlarges the pores of the cell membranes, which kills the cells and releases their contents.

PEF for food processing is a developing technology still in the research phase.

As a complement or substitute for traditional thermal technology, pulsed electric field (PEF) is a promising, non-thermal technology for the inactivation of microorganisms with minimal impact on the organoleptic and nutritional properties of food.

Although PEF is the most studied non-thermal technology, to date there are only limited industrial applications known, for the pasteurisation of fruit juices.

Current PEF sterilisation technology is difficult to industrialise.

PEF devices are bulky, expensive and require high voltage. Furthermore, the electrodes are subject to electrolysis and there are risks associated with high-voltage operation.

In current systems, the pulsed electric field is generated outside the circuit of the liquid flow to be treated by applying connections to the electric pulse generator.

The application of an external electric field can increase the membrane potential of cells to a critical level.

This can cause local changes in the membrane structure with the opening of pores, which is reflected in a large change in the conductivity of the cell membranes and, consequently, of the tissues or cells in suspension.

### SUMMARY OF THE INVENTION

The aim of the present invention is to provide an apparatus for treating liquids that overcomes the drawbacks of the prior art.

Within this aim, an object of the invention is to provide a more efficient apparatus.

A particular object of the invention is to provide an apparatus that allows liquids such as water, milk, wine, tomato sauce, oil, etc. to be treated.

A primary object of the invention is to provide an apparatus that allows to prevent contamination and therefore development and spread of diseases such as salmonella and legionella.

A further object of the invention is to provide an apparatus that allows to prevent the excessive proliferation of colonies of bacteria and yeasts which, if present in excessive quantities, can cause mould and pathogens in general.

Another object of the invention is to provide an apparatus that is very easy to use.

Due to its unique design features, this apparatus is able to ensure the highest levels of reliability and safety in use.

This and other objects, which will be better highlighted below, are achieved by an apparatus for treating fluids, as claimed in the appended claims.

### BRIEF DESCRIPTION OF THE DRAWINGS

Further features and advantages of the subject matter of the present invention will be better understood by examining the description of a preferred, but not exclusive, embodiment of the invention, illustrated by way of non-limiting example in the accompanying drawings, in which:

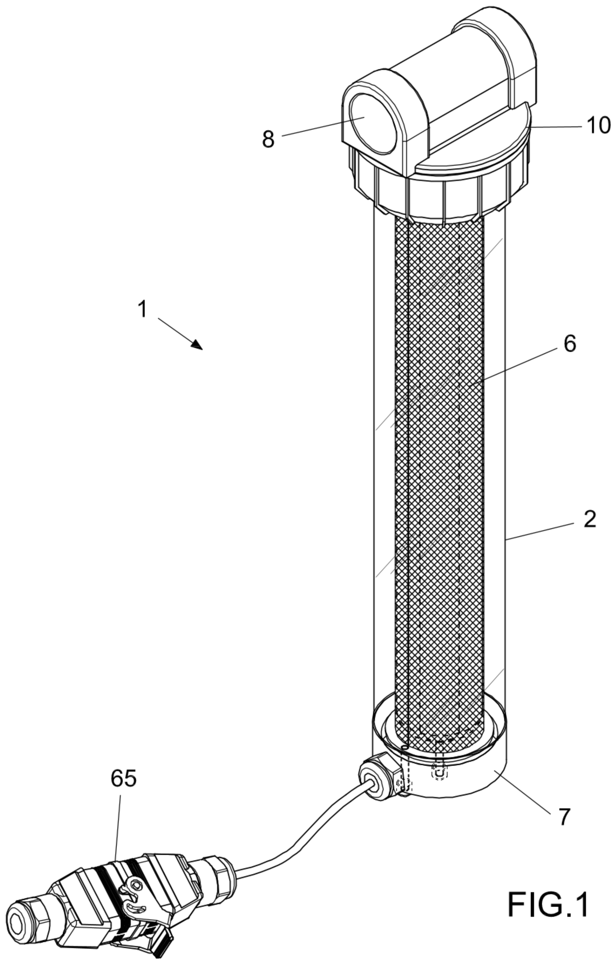

Figure 1 is a perspective view of the apparatus according to the invention;

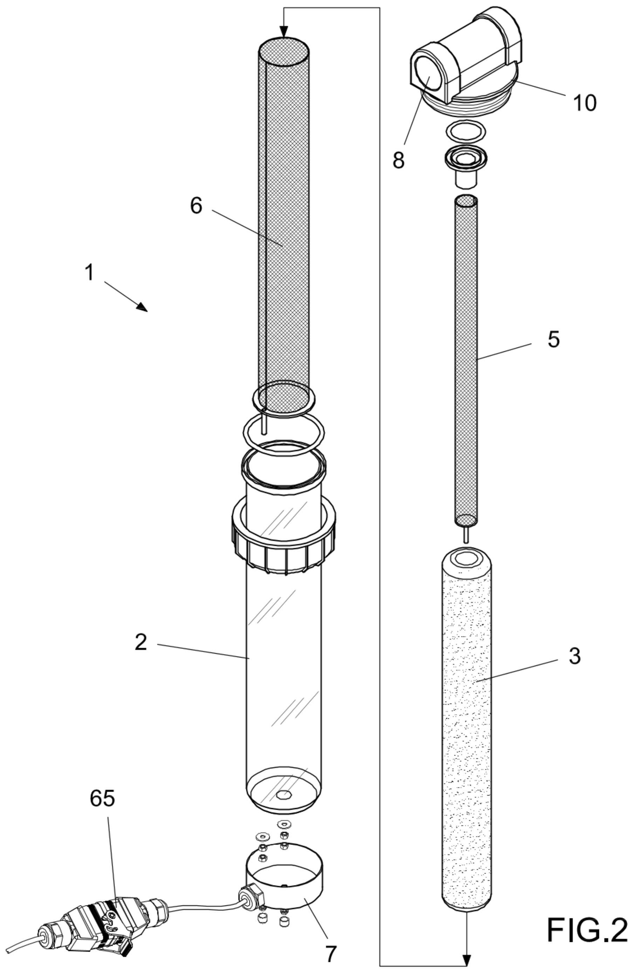

Figure 2 is an exploded view of the apparatus;

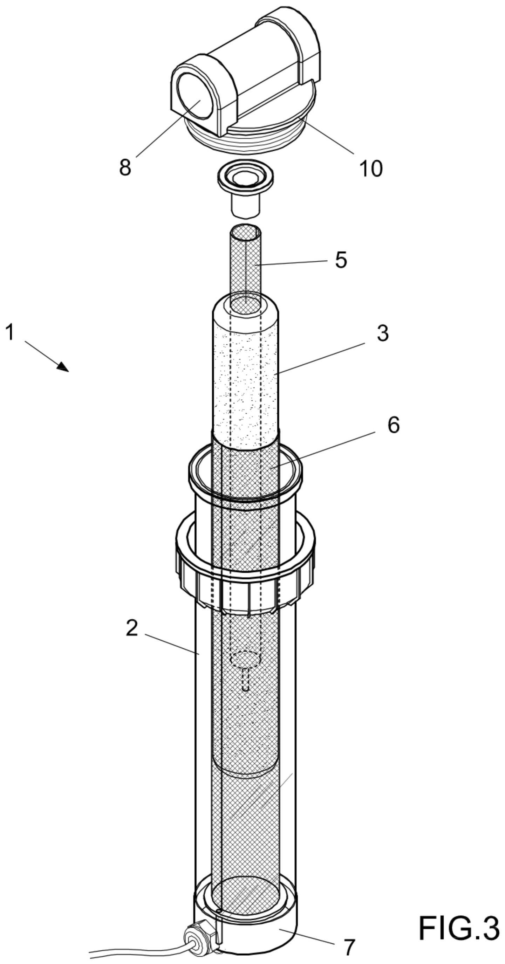

Figure 3 is a partially exploded view of the main body;

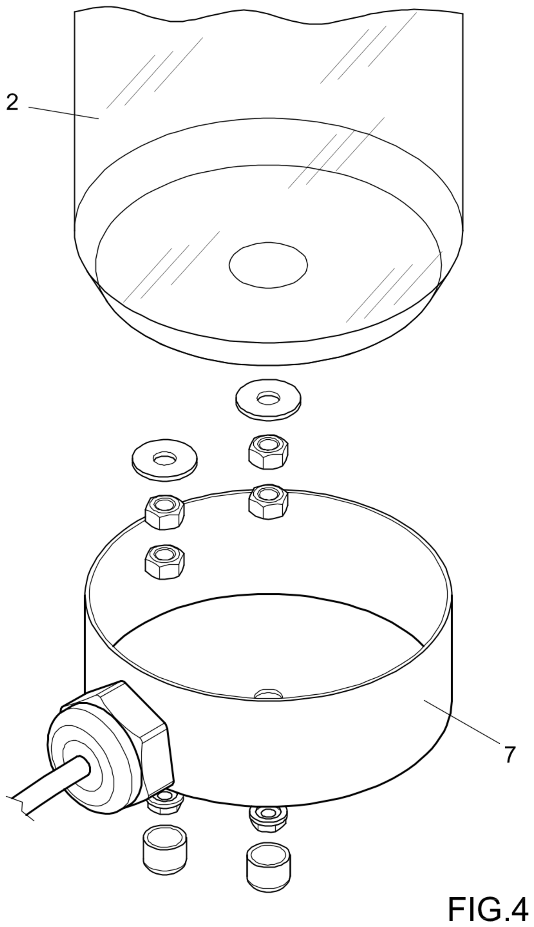

Figure 4 is an enlarged perspective view of the lower part and the base;
Figure 5 is a longitudinal sectional view of the apparatus;

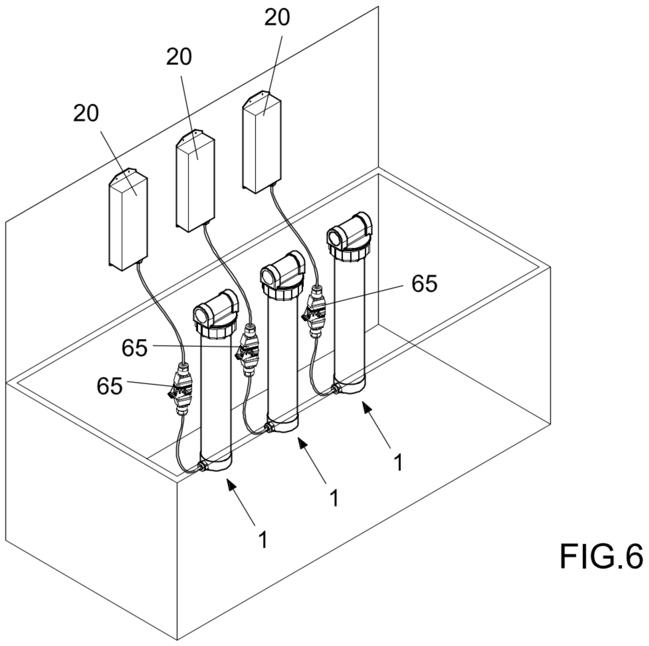

Figure 6 is a perspective view illustrating an example of application of the apparatus.

### DETAILED DESCRIPTION OF THE PREFERRED EMBODIMENTS

With particular reference to the numerical symbols in the above figures, the apparatus according to the invention, indicated as a whole by reference number 1, comprises a substantially cylindrical container body 2 containing a cylindrical cathode 6 and a cylindrical anode 5 coaxial with each other, between which an annular filter 3 is preferably arranged.

The cathode 6 and the anode 5 are reticular and allow liquid to pass through.

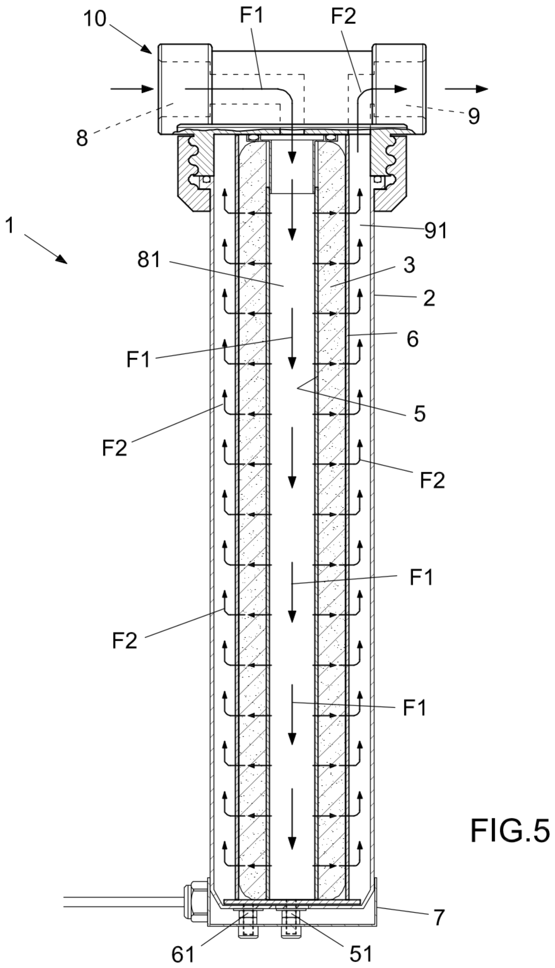

The container 2 is closed at the bottom by a base 7 and at the top by a filter head 10, which has a liquid inlet 8 communicating with the central cavity 81 defined by the cylindrical anode 5, and a liquid outlet 9 connected to an annular gap 91 formed between the cathode 6 and the container 2 (Figure 5).

The annular filter 3, arranged in the annular gap formed between the cylindrical cathode 6 and the cylindrical anode 5, is a molecular sieve filter with the function of removing impurities contained in the treated liquid.

The cathode 6 and the anode 5 are connected to the base 7 through respective connectors 61 and 51, and powered through an electrical connector 65 that receives electrical current from a power supply 20 controlled by an electronic control unit.

With the apparatus 1 in which the cathode 6 and the anode 5 are immersed in the liquid to be treated, a liquid flow F1 enters from the liquid inlet 8 and, descending into the central cavity 81, passes through the anode 5 and becomes electrically charged.

The liquid then passes through the filter 3 and the cathode 6, flowing out as an electrically charged fluid F2 into the gap 91 and then from the liquid outlet 9 (Figure 5).

The apparatus according to the present invention generates a pulsed electric field directly in contact with the liquid inside the flow circuit of the same, by means of the two electrodes, anode 5 and cathode 6, connected directly to the electronic control unit.

The electronic control unit is equipped with specific proprietary software, specially designed and developed, which allows the application of low-frequency, high-intensity electrical pulses, adaptively depending on the conductivity of the liquid and the flow rate, in order to achieve effective application of the frequency fields that respects the treatment processes of the liquid itself, obtaining a desired result, variable depending on the treatment requirements.

The electronic control unit provided in the apparatus of the invention detects the electrical conductivity of the fluid in which the cathode 6 and anode 5 are immersed. According to the invention, the electrical conductivity of the fluid changes depending on its mineral composition and its flow rate through the cathode and anode. As the electrical conductivity of the fluid changes, the software controlling the control unit modifies the frequency of the electric field pulses in order to maintain the design conductivity.

The apparatus according to the present invention sends an electrical signal to the electrodes provided and exploits the conductivity of the liquid.

Advantageously, the signal has a frequency of about 300 Hz, an amplitude of 100V and pulses of few milliseconds.

To increase the efficiency of the treatment, the signal changes polarity between the cathode 6 and the anode 5 every 90 seconds.

This system, also known as electroporation (PEF), offers great advantages in the treatment of liquids, ensuring greater safety and quality of the final product.

The change in polarity prevents electrode saturation and improves the distribution of the electric field within the liquid, resulting in greater treatment uniformity and a reduction in localised damage to the electrodes (residue deposits) and localised damage in the liquid that escapes treatment.

When the liquid from the central cavity 81 passes through the micro-holes in electrode 6, it undergoes a process of electroporation, whereby the membrane of the cells present in the liquid (bacteria, etc.) undergoes a distension that makes it more permeable, breaking or piercing it to the point of causing sterilisation, or slowing down, or stopping, or rebalancing bacterial proliferation to the desired extent.

For example, the following parameters are preferably used for wine treatment:
- frequency: 300 Hz
- treatment time: 90 seconds
- signal amplitude: 100V
- wave maintenance: polarity change every 90 seconds

The treatment has the following specific advantages:
- drastic reduction of barrel ageing time by 6 times, thanks to the permea-bilisation of the cell membranes of the grape;
- improvement of the extraction of polyphenols during maceration, resulting in wines with greater expression and aromatic complexity;
- reduction of microbial load, reducing the use of sulphites and producing more fruity and modern wines.

PEF treatment in wine is used to improve polyphenol extraction and stabilise microorganisms.

Polarity change increases the efficiency of the treatment, reducing the microbiological load without altering the organoleptic properties of the wine.

According to a further example, the following parameters are preferably used for the treatment of must:
- frequency: 250 Hz
- treatment time: 60 seconds
- signal amplitude: 80V
- wave maintenance: polarity change every 60 seconds

The treatment promotes the extraction of phenolic compounds and reduces the microbial load.

Furthermore, in must, PEF treatment facilitates the extraction of aromatic and phenolic compounds during maceration, improving the complexity of the final wine.

Adjusting the frequency and amplitude of the signal helps to preserve the delicate aromas present in the must.

According to a further example, the following parameters are preferably used for the treatment of water:
- frequency: 350 Hz
- treatment time: 120 seconds
- signal amplitude: 120V
- wave maintenance: polarity change every 120 seconds.

This specific treatment transforms limescale into aragonite, preventing the formation of scale, and reduces the bacterial load, improving water quality.

For water, PEF treatment is aimed at disinfection and reduction of the microbiological load. The frequency and amplitude are optimised to effectively eliminate bacteria and other microorganisms without adversely affecting the chemical properties of the water.

According to a further example, the following parameters are preferably used for the treatment of edible oil:
- frequency: 200 Hz
- treatment time: 45 seconds
- signal amplitude: 90V
- wave maintenance: polarity change every 45 seconds

The treatment improves the stability and quality of the oil and reduces the microbial load.

In the treatment of oil, the aim is to improve quality through stabilisation and reduction of the microbiological load. The higher frequency and increased amplitude are necessary to penetrate the viscosity of the oil and achieve uniform treatment.

According to a further example, the following parameters are preferably used for the treatment of tomato sauce:
- frequency: 220 Hz
- treatment time: 75 seconds
- signal amplitude: 85V
- wave maintenance: polarity change every 75 seconds

The treatment improves the consistency and flavour of the sauce and reduces its microbial load.

For sauces, PEF treatment is used to reduce the microbiological load and stabilise the product, improving shelf life without altering flavours and textures. The combination of frequency and amplitude is calibrated to maintain the organoleptic quality of the sauces.

According to a further example, the following parameters are preferably used for the treatment of fruit juice:
- frequency: 270 Hz
- treatment time: 90 seconds
- signal amplitude: 100V
- wave maintenance: polarity change every 90 seconds

The treatment maintains the organoleptic properties of the juice and reduces the microbiological load, increasing the shelf life.

In fruit juice, PEF treatment helps preserve nutrients and improve microbiological stability. Adjusting the parameters ensures that juices retain their fresh flavour and nutritional values without the use of chemical preservatives.

The apparatus according to the invention allows for the improvement of treated products, which, in the cited examples, can be summarised as follows:
- wine: reduction of barrel ageing time by 6 times; improvement in polyphenol extraction;
- must: more efficient extraction of phenolic compounds;
- water: transformation of limestone into aragonite;
- oil: improvement in stability and quality;
- sauce: improvement in consistency and flavour;
- fruit juice: maintenance of organoleptic properties and increased shelf life.

The apparatus according to the present invention offers several important advantages.

The treatment is non-invasive, physical, practical and immediate.

The treatment reduces the use of chemicals, promoting eco-sustainable production.

The significant reduction in microbial load improves food safety.

The system is versatile, being easily adaptable to different production requirements.

The system according to the invention is economically competitive, allowing producers to differentiate themselves from the competition with superior quality products.

In practice, it has been found that the invention achieves its intended aim and objects.

In fact, an apparatus has been developed that can revolutionise the treatment of liquids in various sectors, helping to improve product quality and environmental sustainability.

The apparatus according to the invention represents a revolution in the treatment of liquids thanks to pulsed electric field (PEF) technology.

The electronic control unit and dedicated software allow the treatment parameters to be adapted to the specific requirements of each liquid, ensuring optimal results.

This technology offers numerous advantages, including reduced wine ageing times, the transformation of limestone into aragonite in water, and the reduction of microbial load in various fluids, contributing to more modern and eco-sustainable production.

Of course, the materials used, as well as the dimensions, can be anything, depending on requirements.

In addition, the annular filter 3 could also be omitted.

## Claims

1. Apparatus for treating fluids **characterised in that** it comprises a container body (2) containing a cathode (6) and an anode (5); said cathode (6) and anode (5) being reticular and allowing a liquid to pass through; said container (2) having a liquid inlet (8) and a liquid outlet (9); said apparatus comprising an electrical connector (65) that receives electrical current from a power supply (20) controlled by an electronic control unit for supplying power to the cathode (6) and the anode (5); said container body (2) being configured to contain and immerse the cathode (6) and the anode (5) in a liquid to be treated, allowing said liquid to flow through said cathode (6) and anode (5); wherein said control unit generates a pulsed electric field in the liquid between the cathode and the anode.

2. Apparatus according to claim 1, **characterised in that** said container body (2) is substantially cylindrical; said cathode (6) and anode (5) being substantially cylindrical and coaxial; an annular filter (3) being arranged between said cathode (6) and anode (5).

3. Apparatus according to claim 2, **characterised in that** said container (2) is closed at the bottom by a base (7) and at the top by a filter head (10); said filter head (10) having said liquid inlet (8) and a liquid outlet (9); said liquid inlet (8) being associated with a central cavity (81) defined by said anode (5); said liquid outlet (9) being connected to an annular gap (91) formed between said cathode (6) and said container (2).

4. Apparatus according to claim 1, **characterised in that** said annular filter (3) is arranged in the annular gap between the anode (5) and the cathode (6) and is a molecular sieve filter.

5. Apparatus, according to one or more of the preceding claims, **characterised in that** said cathode (6) and anode (5) are connected to said base (7) via respective connectors (61, 51) powered by said electrical connector (65) which receives electrical current from said power supply (20) controlled by an electronic control unit.

6. Method for treating fluids with the apparatus according to one or more of the preceding claims, **characterised in that** it provides for the creation of a variable frequency between said cathode (6) and anode (5) immersed in the fluid to be treated.

7. Method according to claim 6, **characterised in that** said electronic control unit sends an electrical signal of variable frequency from about 200 to about 350 Hz, with an amplitude from about 80V to about 120V, for a treatment time of about 45 seconds to 120 seconds.

8. Method according to claim 6 or 7, **characterised in that** the fluid inside the anode (5) passes through the anode (5) and the cathode (6) and is discharged at the liquid outlet (9).

9. Method according to one or more of the preceding claims, **characterised in that** said electronic control unit sends an electrical signal with a change of polarity between the cathode and the anode every approximately 45 to 120 seconds.
